# EUROPEAN PATENT APPLICATION

(11) **EP 4 617 097 A1**
(43) Date of publication of application: **17.09.2025**
(21) Application number: 23887824.3
(22) Date of filing: 30.10.2023
(51) Int. Cl.: B60K 35/00, B60R 11/00, B60R 11/02, G06F 3/14, G06F 3/147

(54) **METHOD AND APPARATUS FOR DISPLAYING INFORMATION ON INSTRUMENT SCREEN, AND ELECTRONIC DEVICE AND VEHICLE**

(30) Priority: 09.11.2022 CN 202211398399
(71) Applicant: Great Wall Motor Company Limited, Baoding, Hebei 071000 (CN)
(72) Inventor: NIE, Chunyin, Baoding, Hebei 071000 (CN); GAO, Chunlei, Baoding, Hebei 071000 (CN); LIU, Dongxiang, Baoding, Hebei 071000 (CN); WU, Aiyong, Baoding, Hebei 071000 (CN); WANG, Yingwei, Baoding, Hebei 071000 (CN)
(74) Representative: Klunker IP Patentanwälte PartG mbB
(86) International application number: PCT/CN2023/127665
(87) International publication number: WO 2024/099134

(57) **Abstract**

The present invention provides a method and apparatus for displaying information on an instrument screen, and an electronic device and a vehicle. According to functions specifically corresponding to service modules in an in-vehicle entertainment system, an SDK interface corresponding to the service modules is obtained, and the service information in the service modules is converted into remote view information; then, the remote view information is received by using the SDK interface, and finally, according to an instruction for displaying information on the instrument screen, the remote view information is displayed on the instrument screen. By using an SDK interface and a remote view technology, a multi-screen interaction function module only needs to be responsible for displaying remote view information on an instrument screen, and service modules and information corresponding to the service modules are not stored in the multi-screen interaction function module; and when service functions are expanded, only the service modules need to be developed, and the multi-screen interaction function module does not need to be developed synchronously, thereby decoupling the multi-screen interaction function module from each service module and avoiding a waste in manpower and resources.

## Description

The present invention claims priority to Chinese Patent Application No. 202211398399.4, filed with CNIPA on November 09, 2022 and entitled "Method and Apparatus for Displaying Information on Instrument Screen, and Electronic Device and Vehicle".

### TECHNICAL FIELD

The present invention relates to the field of in-vehicle intelligent technology, in particular to a method and apparatus for displaying information on an instrument screen, and an electronic device and a vehicle.

### BACKGROUND

With continuous development of in-vehicle technology, the application of intelligent cockpits in an in-vehicle environment has become increasingly widespread. The intelligent cockpit has two major systems: an instrument system and an in-vehicle entertainment system, and the two systems are capable of reflecting their respective functions and information through different screens. In practical applications, information in the in-vehicle entertainment system may be shared with the instrument system, such that in-vehicle entertainment information with various functions, such as maps, multimedia and address books, may be displayed on the instrument screen.

In the prior art, a multi-screen interaction function module is generally used to integrate all the in-vehicle entertainment information that needs to be displayed on the instrument screen, therefore, service information with various functions in the in-vehicle entertainment system is stored in the multi-screen interaction function module, and the in-vehicle entertainment information is integrated and the in-vehicle entertainment information is displayed on the instrument screen by means of such service information. However, during the use of the multi-screen interaction function module, due to service coupling between the multi-screen interaction function module and service modules of the in-vehicle entertainment system, when developers develop the service information of the service modules in the in-vehicle entertainment system, they need to synchronously develop and process the service information in the multi-screen interaction function module, thereby resulting in repetitive development services and leading to a waste in manpower and resources and higher development costs.

Therefore, how to solve the problem of resource waste caused by the need to synchronously develop the service information in the multi-screen interaction function module when developing service information has become an urgent technical problem for those skilled in the art.

### SUMMARY

Based on the above problems, in order to solve the problem of the need to synchronously develop the service information of the multi-screen interaction function module when developing service information, the present invention provides a method and apparatus for displaying information on an instrument screen, and an electronic device and a vehicle.

Embodiments of the present invention disclose the following technical solutions:
in a first aspect, the present invention discloses a method for displaying information on an instrument screen, including:
determining an SDK interface corresponding to service modules according to functions corresponding to the service modules in an in-vehicle entertainment system;
receiving remote view information which is obtained by converting service information in the service modules by means of the SDK interface; and
controlling an instrument screen to display the remote view information.

Optionally, after controlling the instrument screen to display the remote view information, the method further includes:
parsing the remote view information to obtain a plurality of remote operation instructions;
determining a remote operation instruction corresponding to an instrument screen operation instruction from the plurality of remote operation instructions according to the instrument screen operation instruction; and
sending the remote operation instruction corresponding to the instrument screen operation instruction to the service module, such that the service module executes the corresponding operation according to the received remote operation instruction.

Optionally, after determining the SDK interface corresponding to the service modules according to functions corresponding to service modules in an in-vehicle entertainment system, the method further includes:
determining a data source of the service module;
if the service module has a plurality of data sources, determining a data source switching interface; and
completing the switching of an operating system of the service module through the data source switching interface according to the data source switching instruction.

Optionally, before controlling the instrument screen to display the remote view information, the method further includes:
if multiple pieces of remote view information belonging to different service modules exist, determining the display position of each piece of remote view information on the instrument screen according to the function of the service module corresponding to each piece of remote view information;
the controlling the instrument screen to display the remote view information specifically includes:
controlling the instrument screen to display each piece of remote view information at a corresponding display position.

Optionally, after controlling the instrument screen to display the remote view information, the method further includes:
adjusting the display position of the remote view information on the instrument screen.

In a second aspect, the present invention discloses an apparatus for displaying information on an instrument screen, wherein the apparatus includes:
an interface determination module configured to determine an SDK interface corresponding to the service modules according to functions corresponding to service modules in an in-vehicle entertainment system;
an information reception module configured to receive remote view information which is obtained by converting service information in the service modules by means of the SDK interface; and
an information display module configured to control an instrument screen to display the remote view information.

Optionally, the apparatus further includes: a remote operation module; wherein the remote operation module is configured to:
parse the remote view information to obtain a plurality of remote operation instructions;
determine the remote operation instruction corresponding to the instrument screen operation instruction from the plurality of remote operation instructions according to the instrument screen operation instruction; and
send the remote operation instruction corresponding to the instrument screen operation instruction to the service module, such that the service module executes the corresponding operation according to the received remote operation instruction.

Optionally, the apparatus further includes an operating system switching module, wherein the operating system switching module is configured to:
determine a data source of the service module;
if the service module has a plurality of data sources, determine a data source switching interface; and
complete the switching of an operating system of the service module through the data source switching interface according to the data source switching instruction.

Optionally, the apparatus further includes a display position determination module, wherein the display position determination module is configured to:
if multiple pieces of remote view information belonging to different service modules exist, determine the display position of each piece of remote view information on the instrument screen according to the function of the service module corresponding to each piece of remote view information;
the controlling the instrument screen to display the remote view information specifically includes:
controlling the instrument screen to display each piece of remote view information at a corresponding display position.

Optionally, the apparatus further includes: a display position adjustment module, wherein the display position adjustment module is configured to:
adjust the display position of the remote view information on the instrument screen.

Compared with the prior art, the present invention has the following beneficial effects: according to the present invention, by using an SDK interface and the remote view technology, the multi-screen interaction function module only needs to be responsible for displaying the remote view information on the instrument screen, and the service modules and the information corresponding to the service modules are not stored in the multi-screen interaction function module; and when service functions are expanded, only the service modules need to be developed, and the multi-screen interaction function module does not need to be developed synchronously, thereby decoupling the multi-screen interaction function module from each service module and avoiding a waste in manpower and resources.

### BRIEF DESCRIPTION OF THE DRAWINGS

Fig. 1 is a flow diagram of a method for displaying information on an instrument screen provided in an embodiment of the present invention;
Fig. 2 is a structural schematic diagram of an apparatus for displaying information on an instrument screen provided in an embodiment of the present invention;
Fig. 3 is a structural schematic diagram of an electronic device provided in an embodiment of the present invention.

### DETAILED DESCRIPTION OF THE EMBODIMENTS

As previously described, in the prior art, a multi-screen interaction function module is generally used to integrate all the in-vehicle entertainment information that needs to be displayed on the instrument screen, therefore, service information with various functions in the in-vehicle entertainment system is stored in the multi-screen interaction function module, and the in-vehicle entertainment information is integrated and the in-vehicle entertainment information is displayed on the instrument screen by means of such service information. However, during the use of the multi-screen interaction function module, due to service coupling between the multi-screen interaction function module and service modules of the in-vehicle entertainment system, when developers develop the service information of the service modules in the in-vehicle entertainment system, they need to synchronously develop and process the service information in the multi-screen interaction function module, thereby resulting in repetitive development services and leading to a waste in manpower and resources and higher development costs.

Through researches, the inventor has provided a method and apparatus for displaying information on an instrument screen, and an electronic device and a vehicle. According to functions specifically corresponding to service modules in an in-vehicle entertainment system, by using an SDK (Software Development Kit) interface and the remote view technology, the multi-screen interaction function module only needs to be responsible for displaying the remote view information on the instrument screen, and the service modules and the information corresponding to the service modules are not stored in the multi-screen interaction function module; and when service functions are expanded, only the service modules need to be developed, and the multi-screen interaction function module does not need to be developed synchronously, thereby decoupling the multi-screen interaction function module from each service module and avoiding a waste in manpower and resources.

In order to enable those skilled in the art to better understand the solutions of the present invention, the technical solutions in the embodiments of the present invention will be clearly and completely described below in combination with accompanying drawings in the embodiments of the present invention. Apparently, the described embodiments are merely a part but not all of the embodiments of the present invention. Based on the embodiments in the present invention, all the other embodiments obtained by those skilled in the art without any creative effort shall all fall within the protection scope of the present invention.

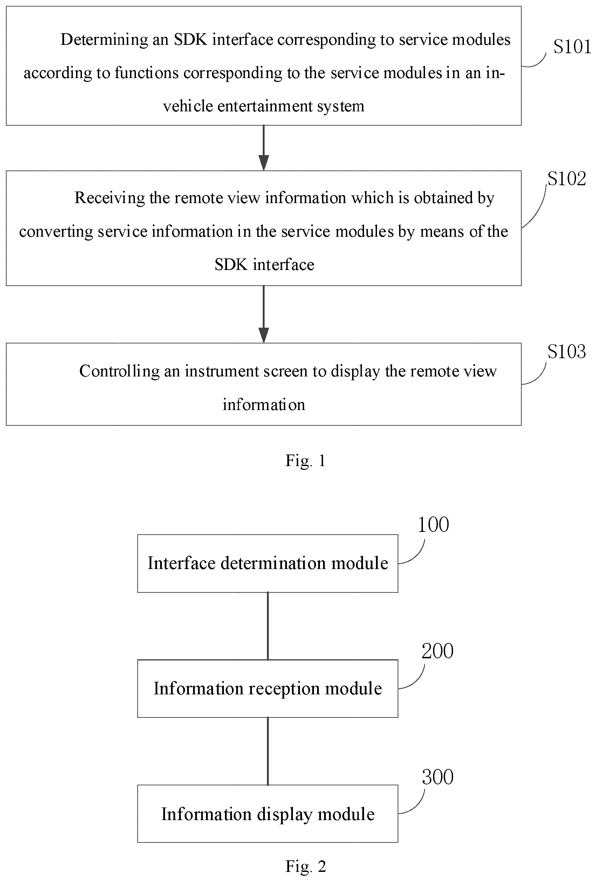

Please refer to Fig. 1 which is a flow diagram of a method for displaying information on an instrument screen provided in the present invention.

S101: determining an SDK interface corresponding to service modules according to functions corresponding to the service modules in an in-vehicle entertainment system.

In the in-vehicle entertainment system, different services are implemented by service modules with different functions, such as independent service modules for maps, multimedia, address books, etc. When the above service modules cast the service information onto the instrument screen, display areas of the service information remain consistent. When a plurality of service modules cast the service information onto the instrument screen simultaneously, problems such as conflicts in the screen-casting service logic and display conflicts of each service module may arise, thereby resulting in chaotic display on the instrument screen. Therefore, in the prior art, a multi-screen interaction function module is designed. Service information contained in various service modules with different functions is stored in the multi-screen interaction function module, so as to integrate all the data that needs to be cast and displayed, and further manage and control the screen casting of the instrument.

However, during the use of the multi-screen interaction function module, since service information in service modules with a plurality of different functions is stored in the multi-screen interaction function module, service coupling exists between the multi-screen interaction function module and the service modules of the in-vehicle entertainment system. When the service information of the service modules in the in-vehicle entertainment system needs to be developed, the service information in the multi-screen interaction function module needs to be developed and processed synchronously, thereby leading to repetitive development services and higher development costs.

Therefore, in the present invention, the SDK interface corresponding to each service module will be integrated first according to the functions corresponding to each service module in the in-vehicle entertainment system, so as to complete the transmission of remote view information later by means of the SDK interface of each service module. By using the remote view information to replace the previous service information, coupling between the multi-screen function module and the service module caused by direct association between the multi-screen function module and the service information may be avoided. Wherein, the SDK (Software Development Kit) interface refers to a set of programming interfaces or function collections provided in the software development kit. These interfaces may be used to access and control the functions in the software development kit, so as to develop and customize specific applications or services. The SDK interfaces disclosed in the present invention include but are not limited to: hardware interfaces, network interfaces, database interfaces, multimedia interfaces, programming interfaces, and third-party service interfaces. By using the SDK interface, the existing functions and resources may be utilized more efficiently, so as to accelerate the development speed, reduce repetitive work, and improve quality and stability of the applications.

S102: receiving the remote view information which is obtained by converting service information in the service modules by means of the SDK interface.

After determining the SDK interface corresponding to the service module according to specific functions of the service module, the service module will convert the service information in the service module using the remote view technology to obtain remote view information, such that the multi-screen interaction function center receives this remote view information by means of the SDK interface.

By using the remote view information to replace the previous solution of directly using the service information in the service module to control the screen casting of an instrument, the multi-screen interaction function module is decoupled from the service module. Moreover, the SDK interface is used to minimize development tasks of the service information, reduce the number of interfaces, and make the service module and the service information itself easier to maintain.

S103: controlling the instrument screen to display the remote view information.

After receiving the remote view information, the multi-screen interaction function module will continuously monitor the operation instructions of the instrument system. Upon monitoring the operation instructions issued by the instrument system, the multi-screen interaction function module will display the remote view information on the instrument screen according to specific operation instructions of the instrument system, thereby completing the display of the in-vehicle entertainment information on the instrument screen. Wherein, users may adjust the display position of the remote view information on the instrument screen by themselves.

As an optional embodiment, after step S103, the method further includes:
parsing the remote view information to obtain a plurality of remote operation instructions;
determining a remote operation instruction corresponding to an instrument screen operation instruction from the plurality of remote operation instructions according to the instrument screen operation instruction; and
sending the remote operation instruction corresponding to the instrument screen operation instruction to the service module, such that the service module executes the corresponding operation according to the received remote operation instruction.

After obtaining the remote view information, the remote view information may be parsed to obtain a plurality of remote operation instructions. Wherein different remote operation instructions correspond to different operations. The service module is capable of performing different operations on the remote view information according to different remote operation instructions, and finally the multi-screen interaction function module will cast the remote view information onto the instrument screen. In this process, the multi-screen interaction function module is only responsible for casting and displaying the remote view information, and the operations on the remote view information are completed by the service module. Therefore, no service coupling still exists between the multi-screen interaction function module and the service module, and the operation of the multi-screen interaction function module is more simple and intuitive.

As another optional embodiment, after step S101, the method further includes:
determining a data source of the service module;
if the service module has a plurality of data sources, determining a data source switching interface; and
completing the switching of an operating system of the service module through the data source switching interface according to the data source switching instruction.

In the actual application process, the same service module may have a plurality of data sources, for example, Bluetooth phones, Carplay and AndroidAuto all belong to the same service module, that is, they have the same service function and are all capable of realizing a call function in an in-vehicle environment. Although the three all belongs to the same service module and has the same function, due to differences in operation codes at home and abroad, when users need to select Carplay or AndroidAuto according to the configuration of their own mobile phones, they need to switch the specific data source of the service module. Therefore, after determining the SDK interface of the service module, the data source of the service module needs to be determined. If the service module has a plurality of data sources, a data source switching interface is provided. When users initiate a data source switching instruction through the instrument screen, the switching of an operating system of the service module is completed through the data source switching interface, such that when users use the functions of the service module, they are capable of switching the data source of the service module according to their own needs, thereby completing the user experience.

As another optional embodiment, before step S103, the method further includes:
if multiple pieces of remote view information belonging to different service modules exist, determining the display position of each piece of remote view information on the instrument screen according to the function of the service module corresponding to each piece of remote view information.

The controlling the instrument screen to display the remote view information specifically includes:
controlling the instrument screen to display each piece of remote view information at a corresponding display position.

At the same time, if there are multiple pieces of remote view information belonging to different service modules that need to be displayed, the display position of each piece of remote view information on the instrument screen will be determined according to the function of the service module corresponding to each piece of remote view information. For example, when the map navigation information and the address book list information need to be displayed simultaneously, the remote view information of the map navigation may be displayed in a position close to the center of the instrument screen, and the address book list information may be displayed in a lower right corner of the instrument screen. The display position of the remote view information is determined according to specific functions of the remote view information, thereby completing the display of the remote view information. Users do not need to manually adjust the specific display position of the remote view information while driving, thereby ensuring driving safety of users.

The embodiment of the present invention provides a method for displaying information on an instrument screen. According to the function specifically corresponding to the service module in the in-vehicle entertainment system, by using an SDK interface and the remote view technology, the multi-screen interaction function module only needs to be responsible for displaying the remote view information on the instrument screen, and the service modules and the information corresponding to the service modules are not stored in the multi-screen interaction function module; and when service functions are expanded, only the service modules need to be developed, and the multi-screen interaction function module does not need to be developed synchronously, thereby decoupling the multi-screen interaction function module from each service module and avoiding a waste in manpower and resources.

An apparatus for displaying information on an instrument screen provided in the embodiment of the present invention will be introduced below. The apparatus for displaying information on the instrument screen described below and the method for displaying information on the instrument screen described above may be referred to in correspondence with each other.

Please refer to Fig. 2 which is a structural schematic diagram of an apparatus for displaying information on an instrument screen provided in the present invention. As shown in Fig. 2, the apparatus includes:
an interface determination module 100 configured to determine an SDK interface corresponding to service modules according to functions corresponding to the service modules in an in-vehicle entertainment system;
an information reception module 200 configured to receive remote view information which is obtained by converting service information in the service modules by means of the SDK interface; and
an information display module 300 configured to control an instrument screen to display the remote view information.

Optionally, the apparatus further includes: a remote operation module, wherein the remote operation module is configured to:
parse the remote view information to obtain a plurality of remote operation instructions;
determine a remote operation instruction corresponding to an instrument screen operation instruction from the plurality of remote operation instructions according to the instrument screen operation instruction; and
send the remote operation instruction corresponding to the instrument screen operation instruction to the service module, such that the service module executes the corresponding operation according to the received remote operation instruction.

Optionally, the apparatus further includes: an operating system switching module, wherein the operating system switching module is configured to:
determine a data source of the service module;
if the service module has a plurality of data sources, determine the data source switching interface; and;
complete the switching of the operating system of the service module through the data source switching interface according to the data source switching instruction.

Optionally, the apparatus further includes: a display position determination module, wherein the display position determination module is configured to:
if multiple pieces of remote view information belonging to different service modules exist, determine the display position of each piece of remote view information on the instrument screen according to the function of the service module corresponding to each piece of remote view information;
the controlling the instrument screen to display the remote view information specifically includes:
controlling the instrument screen to display each piece of remote view information at a corresponding display position.

Optionally, the apparatus further includes: a display position adjustment module, wherein the display position adjustment module is configured to:
adjust the display position of the remote view information on the instrument screen.

Electronic Device Embodiment

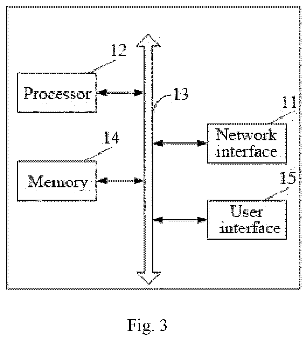

Please refer to Fig. 3 which is a structural schematic diagram of an electronic device provided in an embodiment of the present invention, and the electronic device includes:
a memory 11 configured to store computer programs; and
a processor 12 configured to implement the steps of the method for displaying information on an instrument screen described in any of the above method embodiments when executing the computer programs.

In this embodiment, the device may be an in-vehicle computer, a PC (Personal Computer), or a terminal device such as a smart phone, a tablet computer, a palmtop computer, or a portable computer. The above various modules may be processors capable of implementing corresponding functions.

The device may include a memory 11, a processor 12 and a bus 13.

Among them, the memory 11 includes at least one type of readable storage medium. The readable storage medium includes a flash memory, a hard disk, a multimedia card, a card-type memory (for example, an SD or DX memory), a magnetic memory, a magnetic disk, an optical disk, etc. In some embodiments, the memory 11 may be an internal storage unit of the device, such as a hard disk of the device. In some other embodiments, the memory 11 may also be an external storage device of the device, such as a plug-in hard disk equipped on the device, a smart media card (SMC), a secure digital (SD) card, or a flash card. Further, the memory 11 may also include both an internal storage unit and an external storage device of the device. The memory 11 may be configured not only to store application software installed on the device and various types of data, such as program codes for executing a fault prediction method, but also to temporarily store data that has been output or will be output.

In some embodiments, the processor 12 may be a central processing unit (CPU), a controller, a microcontroller, a microprocessor, or other data processing chips, and is configured to run program codes stored in the memory 11 or process data, such as executing the program codes of the fault prediction method.

The bus 13 may be a peripheral component interconnect (PCI in short) bus or an extended industry standard architecture (EISA in short) bus, etc. The bus may be divided into an address bus, a data bus, a control bus, etc. For the convenience of representation, only one thick line is used for representation in Fig. 3, but it does not mean that there is only one bus or one type of bus.

Further, the device may further include a network interface 14. The network interface 14 may optionally include a wired interface and/or a wireless interface (such as a WI-FI interface, a Bluetooth interface), and is generally configured to establish a communication connection between the device and other electronic devices.

Optionally, the device may also include a user interface 15. The user interface 15 may include a display and an input unit such as a keyboard. Optionally, the user interface 15 may also include a standard wired interface and a wireless interface. Optionally, in some embodiments, the display may be an LED display, a liquid crystal display, a touch liquid crystal display, and an OLED (Organic Light-Emitting Diode) touch device, etc. Wherein, the display may also be appropriately referred to as a display screen or a display unit, and is configured to display the information processed in the device and a visual user interface.

Fig. 3 only shows the device with components 11-15. Those skilled in the art may understand that the structure shown in Fig. 3 does not constitute a limitation on the device, and may include fewer or more components than those shown in the figure, or combine some components, or have different component arrangements.

### Vehicle Embodiment

The embodiment of the present invention also provides a vehicle, and the vehicle includes the memory and the processor in the above electronic device embodiment.

It should be noted that each embodiment in this specification is described in a progressive manner, and the same or similar parts among the various embodiments may be referred to each other. Each embodiment focuses on the differences from other embodiments. In particular, for the method and device embodiments, since they are basically similar to the method embodiment, the description is relatively simple, and the related parts can be referred to the partial description of the method embodiment. The method and apparatus embodiments described above are merely illustrative. The units described as separate components may be or may not be physically separated, and the components indicated as units may be or may not be physical units, that is, they may be located in one place, or may be distributed on multiple network units. Some or all of the modules may be selected according to actual needs to achieve the objective of the solution of this embodiment. Those skilled in the art can understand and implement without any creative effort.

The above are only specific embodiments of the present invention, but the protection scope of the present invention is not limited thereto. Any changes or substitutions that can be easily conceived by those skilled in the art within the technical scope disclosed in the present invention shall fall within the protection scope of the present invention. Therefore, the protection scope of the present invention should be subject to the protection scope of the claims.

## Claims

1. A method for displaying information on an instrument screen, comprising:
determining an SDK interface corresponding to service modules according to functions corresponding to the service modules in an in-vehicle entertainment system;
receiving remote view information which is obtained by converting service information in the service modules by means of the SDK interface; and
controlling the instrument screen to display the remote view information.

2. The method according to claim 1, wherein after controlling the instrument screen to display the remote view information, the method further comprises:
parsing the remote view information to obtain a plurality of remote operation instructions;
determining a remote operation instruction corresponding to an instrument screen operation instruction from the plurality of remote operation instructions according to the instrument screen operation instruction; and
sending the remote operation instruction corresponding to the instrument screen operation instruction to the service module, such that the service module executes the corresponding operation according to the received remote operation instruction.

3. The method according to claim 1, wherein after determining the SDK interface corresponding to the service modules according to functions corresponding to service modules in an in-vehicle entertainment system, the method further comprises:
determining a data source of the service module;
if the service module has a plurality of data sources, determining a data source switching interface; and
completing the switching of an operating system of the service module through the data source switching interface according to the data source switching instruction.

4. The method according to claim 1, wherein before controlling the instrument screen to display the remote view information, the method further comprises:
if multiple pieces of remote view information belonging to different service modules exist, determining the display position of each piece of remote view information on the instrument screen according to the function of the service module corresponding to each piece of remote view information;
the controlling the instrument screen to display the remote view information specifically comprises:
controlling the instrument screen to display each piece of remote view information at a corresponding display position.

5. The method according to claim 1, wherein after controlling the instrument screen to display the remote view information, the method further comprises:
adjusting the display position of the remote view information on the instrument screen.

6. An apparatus for displaying information on an instrument screen, comprising:
an interface determination module configured to determine an SDK interface corresponding to the service modules according to functions corresponding to service modules in an in-vehicle entertainment system;
an information reception module configured to receive remote view information which is obtained by converting service information in the service modules by means of the SDK interface; and
an information display module configured to control the instrument screen to display the remote view information.

7. The apparatus according to claim 6, further comprising: a remote operation module; wherein the remote operation module is configured to:
parse the remote view information to obtain a plurality of remote operation instructions;
determine the remote operation instruction corresponding to the instrument screen operation instruction from the plurality of remote operation instructions according to the instrument screen operation instruction; and
send the remote operation instruction corresponding to the instrument screen operation instruction to the service module, such that the service module executes the corresponding operation according to the received remote operation instruction.

8. The apparatus according to claim 6, further comprising: an operating system switching module, wherein the operating system switching module is configured to:
determine a data source of the service module;
if the service module has a plurality of data sources, determine a data source switching interface; and;
complete the switching of an operating system of the service module through the data source switching interface according to the data source switching instruction.

9. The apparatus according to claim 6, further comprising: a display position determination module, wherein the display position determination module is configured to:
if multiple pieces of remote view information belonging to different service modules exist, determine the display position of each piece of remote view information on the instrument screen according to the function of the service module corresponding to each piece of remote view information;
the controlling the instrument screen to display the remote view information specifically comprises:
controlling the instrument screen to display each piece of remote view information at a corresponding display position.

10. The apparatus according to claim 6, further comprising: a display position adjustment module, wherein the display position adjustment module is configured to:
adjust the display position of the remote view information on the instrument screen.

11. An electronic device, comprising:
a memory configured to store computer programs; and
a processor configured to implement the method for displaying information on the instrument screen according to any one of claims 1 to 5 when executing the computer programs.

12. A vehicle, comprising the electronic device according to claim 11.
